# EUROPEAN PATENT SPECIFICATION

(11) **EP 1 453 893 B1**
(45) Date of publication and mention of the grant of the patent: **26.04.2006**
(21) Application number: 02710650.9
(22) Date of filing: 15.01.2002
(51) Int. Cl.: C08J 5/18, B32B 27/32, B65D 65/40

(54) **FOLDABLE BOPP FILM SUITABLE FOR FAT PACKAGING**
FALTBARE, BIAXIAL VERSTRECKTE PROPYLENFOLIE ZUM VERPACKEN VON FETT
FILM BOPP PLIABLE CONVENANT POUR L'EMBALLAGE DE MATIERES GRASSES

(30) Priority: 27.11.2001 TR 200103415
(43) Date of publication of application: 08.09.2004
(73) Proprietor: Super Film Sanayi ve Ticaret A.S., 27120 Gaziantep (TR)
(72) Inventor: KILECI, Necdet Super Film Sanayi ve Ticaret A.S., 27120 GAZIANTEP (TR); CAMBER, Hasan Super Film Sanayi ve Ticaret A.S., 27120 GAZIANTEP (TR); OZER, Fahri Super Film Sanayi ve Ticaret A.S., 27120 GAZIANTEP (TR)
(74) Representative: Dosterschill, Peter
(86) International application number: PCT/TR2002/000001
(87) International publication number: WO 2003/046058

(56) References cited:
- DE-A- 3 708 354
- GB-A- 2 212 506
- US-A- 5 026 592

## Description

The invention relates to a single or multi layer film with an improved barrier and dead-fold characteristic. More specifically, the present invention relates to a highly foldable and stiff film with single or multi layers for the packaging of food particularly margarine, butter or the like. The material used for packing must be a material which can be readily formed and good in mechanical strength, optical properties and oxygen and moisture barrier properties as well as a material which can be handled in fast moving horizontal or vertical packing equipment which packs the food.

In U.S. Pat No. 5,224,737, it has been described that a thermoplastic nonwoven sheet used to form the casing for a hard cover book or the like. The sheet comprised between about 60% to about 85% by weight of polypropylene homopolymer, between about 12 % to about 32 % by weight of calcium carbonate and between about 3 % to about 12 % by weight of a polyolefin carrier, preferably linear low-density polyethylene. Even this material has proved excellent for hard cover books with its great folding characteristics; it was not a proper material for using in high speed packing machines.

U.S. Pat No. 5,931,505 describes a book casing sheet, which can be folded. It is stated that the sheet is good in folding and compatibility in high-speed machines for making binder casings. The sheet comprises between about 30 % and about 55 % by weight of copolymer of propylene and ethylene; from 0 % to about 12 % by weight of polypropylene homopolymer, between 0 % to about 20 % by weight of high-density polyethylene, between about 23 % and about 35 % by weight of calcium carbonate or talc filler. It has been stated that this material is the first polypropylene sheet with both good folding and high speed machining characteristics. However this material is not suitable for packing the food products, which are susceptible to degradation due to the environmental conditions such as relative humidity and oxygen.

Biaxially oriented polypropylene (BOPP) films are widely used in packaging because they have good stiffness, mechanical strength, optical properties (low haze and high gloss) and moisture barrier properties. However, to date, it has been difficult to produce a foldable BOPP film, which will work with high-speed margarine packing machines. The material must be cutable and foldable to give the rectangular prism shape to the margarine.

BOPP films have been proposed to use in twist wrapping of various food products (DE-C-20 45 115; GB-A-1,231,861; EP-A-0 217 388). These films contain a low-molecular weight resin in order to achieve the desired twist properties.
In EP 0 588 667 A2, it has been described that the hydrocarbon resin used to produce an oriented multilayer shrink film with an improved moisture barrier properties.

EP 0 544 652 A2 describes a film which was used for heat sealed packaging and twist wrapping. The film has been produced by blending polyolefine and a resin. The films produced by using resin (EP 0 288 227 and EP 0 247 898) have been also used for heat sealed packaging.

GB-A-2,055,688 describes a multilayer film, heat-sealable, biaxially oriented polypropylene film, which has good mechanical properties and good heat-sealing properties. The twist properties were improved by the addition of a resin with a molecular weight of about 1000 and also by biaxially stretching simultaneously.

GB-A-2,028,168 describes a heat-sealable biaxially oriented film. The film produced had very good mechanical properties. The mechanical properties such as twist properties were improved by the addition of the resin (1 to 50% by weight) with a molecular weight greater than 600, preferably 1000.

U.S. Pat. No. 4,921,749 describes a heat sealable biaxially oriented polypropylene film with improved optical and mechanical properties. A low molecular weight resin was used to improve the heat sealability and the water vapor and oxygen permeability characteristics. The resin (3 to 30 % by weight) used had a molecular weight less than 1000.

CA2140464 describes a multilayer biaxially oriented polypropylene film containing hydrocarbon resin with a molecular weight particularly from 500 to 2000. It has been mentioned that the resin used in the film is a migrating one.

All the films mentioned above have been found to be not suitable for packaging the fats and fat containing foods because of the possible diffusion of the resins used through the film and migration into the food.

U.S. Pat No. 6,060,139 describes a multilayer polypropylene film containing a resin which enables good twist behavior for twist wrapping and does not result in an increase in the concentration of resin in packaged fat-containing foods. As it is described above the films manufactured for the twist wrapping contain a resin, which is mainly used to improve dead feld properties of the films to make the film suitable for use as a twist film.

DE 3708554 A1 document discloses an opaque cavitated polypropylene or polyester film which is metalized and having, 0.1 - 0.2 g/m².d water vapor transmission rate (WVTR). The document discloses the addition of natural and synthetic resin with low molecular weight and having 80-180°C softening point to polypropylene in order to enhance foldability. This foldable film is used for fat packaging. The polypropylene film disclosed in this document is a single layer film.

In the development of this present invention, two main problems have been aimed to be solved.

One aim of the present invention is to produce a multilayer film, which has good folding behavior for packing a rectangular shaped food product. At the same time, the film should have improved cutability, high mechanical strength, low coefficient of friction, and good stiffness at flat surfaces, optical properties and moisture and oxygen barrier properties. In addition to all these characteristics, it should be free from the production of cracking at the fold and low in grease permeation.

Second aim of the present invention is to provide a process for the production of the single or multilayer film by a co-extrusion process. The film manufactured should be used for packing the food specifically margarine, butter or the like.

The aims of the invention described above have been provided by a single or multilayer polypropylene film, which has at least one base layer. The multilayer films can be made with two or four inner and outer layers.

The five-layer film is made up of the following layers. The base layer (C) and one of the outer layers (A) contain a homopolymer, a filler and a hydrocarbon resin. One of the inner layers (B) contains a homopolymer, a filler, a resin and a coloring agent, the other inner layer (D) contains a homopolymer and a resin and the second outer layer (E) contains a polymer mixture and an anti blocking agent.

The process for the production of the foldable multilayer polypropylene polymer film is as follows:
(a) Coextruding the melted materials of individual layers A, B, C, D, and E of the film through a die.
(b) Biaxially stretching the film at a machine and a transverse direction.
(c) Cooling down the biaxially stretched film.
(d) Corona treating the film
(e) Winding the film up.

The detailed description of the preferred embodiment has been explained below.

The present invention comprises a high barrier, foldable, polypropylene based biaxially oriented multilayer film for packaging the food specifically the margarine, butter or the like.

The earlier studies on the invention of biaxially oriented polypropylene packaging materials for twist packaging of foods have shown that twist characteristics have been obtained by the resins. However it has been stated that the resin migration is possible into the fat containing foods and this property is an undesirable one for packaging of foods.

Papers are customarily used as the material for packaging the margarine, butter or the like. The materials used for the packaging of such products cover the exterior sides of and are turned (folded) and glued to the short sides in order to bond the covering material and form the pack. The material selected for the covering material for packaging must be a material which can be readily formed as well as a material which can be handled in fast moving packaging equipment for the packaging of foods specifically margarine, butter or the like.

An offered A/B/C/D/E multilayer film of the present invention is biaxially oriented foldable propylene based film which comprises between one to five layers, preferably five layers, and a thickness of 20-120 µm, preferably from about 40 to 100 µm, more preferably 70 to 90 µm. The five layer film has the following compositional characteristics. The base layer (C) comprises between about 65% and about 85% by weight of polypropylene, more preferably from about 70% to 80% by weight, between about 5% to about 30% by weight of high performance resin, more preferably from about 10% to about 20% by weight, and about 5% to about 15% by weight of filler, more preferably less than about 10% by weight, such as calcium carbonate or talc in a polypropylene carrier (preferably containing between about 50% and about 70% by weight of calcium carbonate or talc between about 30% and about 50% by weight of a polypropylene). The data in percent by weight relate to the total weight of polypropylene polymer, filler and resin. Polypropylene polymers with a melting point of 150 °C or above are preferred in the base layer. Particularly preferred resins are hydrocarbon resins. The resins having a softening point from 120 to 160°C are particularly preferred.

The outer skin layer (A) comprises between about 75% and about 95% by weight of polypropylene, more preferably from about 80% to 90% by weight, between about 5% to about 20% by weight of high performance resin, more preferably from about 7% to about 15% by weight, about 0% to about 10% by weight of filler, more preferably less than about 5% by weight. The data in percent by weight relate to the total weight of polypropylene polymer, filler, and resin.

The inner layer (B) comprises between about 65% and about 85% by weight of polypropylene, more preferably from about 70% to 80% by weight, between about 5% to about 20% by weight of high performance resin, more preferably from about 10% to about 15% by weight, about 0 to about 10% by weight of filler, more preferably less than about 5% by weight and between about 5% to about 15% by weight of color concentrate. The data in percent by weight relate to the total weight of polypropylene polymer, filler, resin and color concentrate. Color concentrate preferably contains about 60% to about 80% by weight of TiO2 and between about 20% to about 40% by weight of polyolefin carrier. The preferred polyolefin is polypropylene.

The inner layer (D) comprises between about 75% and about 95% by weight of polypropylene, more preferably from about 80% to 90% by weight, between about 5% to about 25% by weight of high performance resin, more preferably from about 10% to about 15% by weight. The data in percent by weight relate to the total weight of polypropylene polymer, and resin.

The other outer layer (E) comprises between about 85% and about 95% by weight of copolymer of propylene and ethylene (preferably over 95% of the copolymer being propylene), between about 5% to about 15% by weight of terpolymer of ethylene, propylene and butylene (preferably over 85% by weight of the terpolymer being polypropylene), and between about 0.1% to about 1.5% by weight of antiblocking agent The data in percent by weight relate to the total weight of copolymer, terpolymer, and antiblocking agent. Preferred antiblocking agents are inorganic additives such as silicon dioxide, calcium carbonate, aluminum silicate, magnesium silicate, calcium phosphate and the like and/or organic polymers such as polyamides, polyesters and the like. Preference is given to aluminum silicate.

The thickness of the outer and the inner layers is generally greater than 0.5 µm, preferably in the range from about 0.8 to 5 µm, more preferably 1 to 3 µm, where the outer and the inner layers on both sides of the base layer can have identical or different thicknesses.

The overall thickness of the single or multilayer polypropylene film according to the invention is between 20 to 120 µm. The base layer of the multilayer films makes up from about 75 to 96% of the overall film thickness.

The mixture of dosed materials to make the film layers are melted and fed to the co-extruders. The melts corresponding to the individual layers of the film are co-extruded through a flat die where the melt become the first necessary form for the further process. After that, it is passed over a chill roller, which tends to solidify film. Following the crystallization, the cast film is dried with blown air. The film is then oriented by stretching it in a longitudinal direction, characterized as the machine direction, and in transverse direction to arrive at a film which can be characterized in terms of orientation ratios in both longitudinal and transverse directions. To avoid shrink back, the film is annealed both after the machine and transverse directional orientations. Subsequently, the film is then cooled down and subjected to further surface treatment with electrical discharge (corona treatment) to achieve high surface tension for printability. The film is wounded on steel cores with suitable tension and contact pressure to achieve good roll quality.

Some examples of the preferred embodiment of this invention are given below.

### EXAMPLE 1

A/B/C/D/E structure five-layer film having an overall thickness of 80 µm was produced by coextrusion followed by biaxially stretching, setting and corona or flame treatment on one or both sides. The outer layer (A) had a thickness of 2 µm, the outer layer (E) had a thickness of 1 µm and the inner layers (B & D) each had a thickness of 2 µm.

### Base layer C:

77.8 % by weight of polypropylene
15 % by weight of hydrocarbon resin having a softening point of 140°C and an average molecular weight of 2000
7.2 % by weight of calcium carbonate.

### Outer layer A:

85.5 % by weight of polypropylene
10 % by weight of hydrocarbon resin having a softening point of 140°C and an average molecular weight of 2000
4.5 % by weight of calcium carbonate.

### Outer layer E:

92 % by weight of ethylene-propylene copolymer having 96.5 % by weight of polypropylene
7.52 % by weight of ethylene, propylene and butylene terpolymer having 85 % by weight polypropylene.
0.48 % by weight of aluminum silicate as an anti blocking agent.

### Inner layer B:

77.8 % by weight of polypropylene
12.5 % by weight of hydrocarbon resin having a softening point of 140°C and an average molecular weight of 2000
2.2 % by weight of calcium carbonate
7.5 % by weight of coloring agent for opacity.

### Inner layer D:

87.5 % by weight of polypropylene
12.5 % by weight of hydrocarbon resin having a softening point of 140°C and an average molecular weight of 2000.

The processing conditions, the overall composition and the properties of the film produced in this way are given below in Tables 1, 2 and 3 respectively. The test methods to determine the characteristics of the produced film are given in Table 3 together with the values found for the defined characteristics.

### COMPARATIVE EXAMPLE 2

The film with a thickness of 80 µm and A/C/E structure without (B) and (D) inner layers having the same components as in Example 1 repeated with the following changes:

### Base layer C:

77.6 % by weight of polypropylene
15.5 % by weight of hydrocarbon resin having a softening point of 140°C and an average molecular weight of 2000
6.9 % by weight of calcium carbonate.

### Outer layer A:

87.4 % by weight of polypropylene
5 % by weight of hydrocarbon resin having a softening point of 140°C and an average molecular weight of 2000
3.6 % by weight of calcium carbonate
4 % by weight of coloring agent for opacity.

After biaxially stretching, setting and corona or flame treatment in the given conditions (Table 1) 4 µm / 75µm /1 µm film prepared has composition and properties showing in Tables 2 and 3 respectively.

### COMPARATIVE EXAMPLE 3

The film with a thickness of 80 µm and C structure without (A) and (E) outer layers and (B) and (D) inner layers having the same components as in Example 1 repeated with the following changes:

### Base layer C:

78.4 % by weight of polypropylene
14.5 % by weight of hydrocarbon resin having a softening point of 140°C and an average molecular weight of 2000
6.6 % by weight of calcium carbonate
0.2 % by weight of coloring agent for opacity
0.29 % by weight of ethylene, propylene and butylene terpolymer
0.01 % by weight of aluminum silicate as an anti blocking agent.

After biaxially stretching, setting and corona or flame treatment in the given conditions (Table 1) 80 µm film prepared has composition showing in Table 2

**Table 1. Processing Conditions**

| **Parameter** | | **Example** | | |
|---|---|---|---|---|
| | | **1** | **2** | **3** |
| **Extrusion Temperature of Layer A** | | 250°C | 250°C | |
| **Extrusion Temperature of Layer B** | | 250°C | | |
| **Extrusion Temperature of Layer C** | | 250°C | 250°C | 250°C |
| **Extrusion Temperature of Layer D** | | 250°C | | |
| **Extrusion Temperature of Layer E** | | 230°C | 230°C | |
| **Longitudinal stretching ratio** | | 4,5 | 4,5 | 4,5 |
| **Longitudinal stretching temperature** | | 135°C | 135°C | 135°C |
| **Transverse stretching ratio** | | 9 | 9 | 9 |
| **Transverse stretching temperature** | | 175°C | 175°C | 175°C |
| **Setting temperature** | | 165°C | 165°C | 165°C |
| **Corona treatment** | **Voltage** | 20kV | 20kV | 20kV |
| | **Frequency** | 25kHz | 25kHz | 25kHz |

**Table 2. Overall Composition of the Films**

| | **Overall Composition of Films (%)** | | |
|---|---|---|---|
| **Components** | **E1** | **E2** | **E3** |
| **Polypropylene** | 77.27 | 77.12 | 78.4 |
| **Propylene-Ethylene Copolymer** | 1.15 | 1.15 | - |
| **Ethylene-Propylene-Butylene Terpolymer** | 0.094 | 0.094 | 0.29 |
| **Resin** | 14.56 | 14.78 | 14.5 |
| **Calcium carbonate** | 6.74 | 6.65 | 6.6 |
| **Coloring agent** | 0.188 | 0.2 | 0.2 |
| **Aluminum silicate** | 0.006 | 0.006 | 0.01 |

**Table 3. Properties of the multilayer films**

| **Properties** | **Method** | | **E1** | **E2** |
|---|---|---|---|---|
| **Thickness (µm)** | ASTM D374 | | 81.3 | 80.2 |
| **Density (g/cm**^{**3**}**)** | | | 0.58 | 0.60 |
| **Tensile strength (N/mm2)** | ASTM D882 | MD | 49 | 50 |
| | | TD | 95 | 100 |
| **Elongation at break** (%) | ASTM D882 | MD TD | 111 34 | 121 38 |
| **Thermal shrinkage (%)** | ASTM D2732 | MD | 3 | 3 |
| | | TD | 1 | 1 |
| **Coefficient of Friction** | ASTM D1894 | | 0.30 | 0.30 |
| **Opacity (%)** | DIN 53146 | | 82.5 | 81.6 |
| **Gloss (45 °C) (%)** | ASTM D2457 | Layer E/ | 90/ | 91/ |
| | | Layer A | 64 | 72 |
| **Total light transmittance (%)** | ASTMD1746 | | 19 | 18 |
| **Surface tension (Dyne/cm)** | ASTM D2578 | | 41 | 41 |
| **Oxygen permeability 23°C (ml/m**^{**2**} **day. atm)** | DIN 53380 | | 400.5 | 399.2 |
| **Water vapor transmission rate (WVTR) 37.8°C; %90 RH (g/m**^{**2**} **day.atm)** | ASTM D895-79 | | 2.42 | 2.41 |

## Claims

1. Coextruded Biaxially Oriented Polypropylene (BOPP) film to pack the food products such as margarine, butter or the like with the layers of A/B/C/D/E, having the base layer C consisting of polypropylene homopolymer, a hydrocarbon resin and a filler and **characterized in that**;
• the outer layer A comprising polypropylene homopolymer and a hydrocarbon resin and a filler,
• the inner layer B comprising polypropylene homopolymer and a hydrocarbon resin, a filler and a coloring agent,
• the second inner layer D consisting essentially of polypropylene homopolymer and a hydrocarbon resin,
• the second outer layer E consisting of an antiblocking agent and a copolymer of ethylene and propylene and/or a terpolymer of ethylene, propylene and butylene.

2. The film as claimed in claim 1, and **characterized in that** the weight of the polypropylene in the base layer C is in between 65% and 85%, preferably in between 70% and 80% of the total weight of the said layer C.

3. The film as claimed in claim 1, and **characterized in that** the weight of the polypropylene in the layers A and D is in between 75% and 95%, preferably in between 80% and 90% of the weight of each of said layers A and D.

4. The film as claimed in claim 1, and **characterized in that** the weight of the polypropylene in the layer B is in between 65% and 85%, preferably in between 70% and 80% of the total weight of the said layer B.

5. The film as claimed in claim 1, and **characterized in that** over 95% by weight of the copolymer in the layer E is polypropylene.

6. The film as claimed in claim 1, and **characterized in that** over 85% by weight of the terpolymer in the layer E is polypropylene.

7. The film as claimed in claim 1, and **characterized in that** the total weight of the hydrocarbon resin is in between 1% to 60% of the total weight of the film.

8. The film as claimed in claim 1, and **characterized in that** the weight of the hydrocarbon resin in the base layer C is in between 5% to 50% of the total weight of the base layer C.

9. The film as claimed in claim 1, and **characterized in that** the weight of the hydrocarbon resin in each of the layers A, B, and D is in between 5% to 20% of the total weight of each layer A, B and D.

10. The film as claimed in claim 1, and **characterized in that** 85 % of the total weight of the resin defined in claims 8 and 9 has the average molecular weight in between 1500 and 2500, and more preferably in between 1750 and 2250.

11. The film as claimed in claim 1, and **characterized in that** the softening point of the resin in the layer C defined in the claims 8, 9 and 10 is in between 120 and 160°C.

12. The film as claimed in claim 1, and **characterized in that** the layers A, B and C comprise filler in between 3% and 30% by weight of each layer A, B, and C.

13. The film as claimed in claim 1, and **characterized in that** the filler defined in claim 12, is calcium carbonate and/or talc in a polyolefin carrier.

14. The film as claimed in claim 1, and **characterized in that** polyolefin carrier in the filler defined in claim 13, is preferably polypropylene.

15. The film as claimed in claim 1, and **characterized in that** the weight of calcium carbonate and/or talc in the filler defined in claims 12, 13 and 14 is in between 50% and 70% and the weight of polyolefin in the filler defined in claims 12,13 and 14 is in between 30% and 50% of the total weight of the filler.

16. The film as claimed in claim 1, and **characterized in that** the layer B comprises color concentrate between 5 % and 15% by weight of the layer B.

17. The film as claimed in claim 1, and **characterized in that** the color concentrate defined in claim 16, is titanium dioxide in a polyolefin carrier.

18. The film as claimed in claim 1, and **characterized in that** polyolefin carrier in the color concentrate defined in claim 17, is preferably polypropylene.

19. The film as claimed in claim 1, and **characterized in that** the weight of titanium dioxide in the color concentrate defined in claim 16 is in between 60% and 80% and the weight of polyolefin in the color concentrate defined in claims 16,17 and 18 is in between 20% and 40% of the total weight of the color concentrate.

20. The film as claimed in claim 1, and **characterized in that** the weight of antiblocking agent in the layer E is in between 0.1% and 1.5% of the total weight of the said layer.

21. The film as claimed in claim 1, and **characterized in that** the antiblocking agent defined in claim 20 is selected from inorganic additives such as silicon dioxide, calcium carbonate, magnesium silicate, aluminum silicate, calcium phosphate and the like and/or organic polymers such as polyamides, polyesters and the like.

22. The film as claimed in claim 1, and **characterized in that** the total thickness of the film is between 40 and 100 µm, preferably between 70 and 90 µm.

23. The film as claimed in claim 1, and **characterized in that** the total thickness of the base layer C is between 30 and 96 µm, preferably between 53 and 86 µm.

24. The film as claimed in claim 1, and **characterized in that** the thickness of each of the layers A, B, D, and E is less than 5 µm.

25. The film as claimed in claim 1, and **characterized in that** the melting point of the polypropylene polymers in the layers A, B, C and D is 150 °C or above.

## Patentansprüche

1. Coextrudierte, biaxial orientierte Polypropylen-(BOPP)-Folie zum Verpacken von Nahrungsmittelprodukten, wie Margarine, Butter oder dergleichen, mit den Schichten A/B/C/D/E mit der Basisschicht C, die aus Polypropylenhomopolymer, einem Kohlenwasserstoffharz und einem Füllstoff besteht, und
**dadurch gekennzeichnet, dass**:
• die äußere Schicht A Polypropylenhomopolymer und ein Kohlenwasserstoffharz und einen Füllstoff umfasst,
• die innere Schicht B Polypropylenhomopolymer und ein Kohlenwasserstoffharz, einen Füllstoff und ein Färbungsmittel umfasst,
• die zweite innere Schicht D im Wesentlichen aus Polypropylenhomopolymer und einem Kohlenwasserstoffharz besteht,
• die zweite äußere Schicht E aus einem Antiblockiermittel und einem Copolymer von Ethylen und Propylen und/oder einem Terpolymer aus Ethylen, Propylen und Butylen besteht.

2. Folie nach Anspruch 1, und **dadurch gekennzeichnet, dass** das Gewicht des Polypropylens in der Basisschicht C zwischen 65 % und 85 %, vorzugsweise zwischen 70 % und 80 % des Gesamtgewichts der Schicht C liegt.

3. Folie nach Anspruch 1, und **dadurch gekennzeichnet, dass** das Gewicht des Polypropylens in den Schichten A und D zwischen 75 % und 95 %, vorzugsweise zwischen 80 % und 90 % des Gewichts von jeder der Schichten A und D liegt.

4. Folie nach Anspruch 1, und **dadurch gekennzeichnet, dass** das Gewicht des Polypropylens in der Schicht B zwischen 65 % und 85 %, vorzugsweise zwischen 70 % und 80 % des Gesamtgewichts der Schicht B liegt.

5. Folie nach Anspruch 1, und **dadurch gekennzeichnet, dass** über 95 Gew.-% des Copolymers in der Schicht E Polypropylen sind.

6. Folie nach Anspruch 1, und **dadurch gekennzeichnet, dass** über 85 Gew.-% des Terpolymers in der Schicht E Polypropylen sind.

7. Folie nach Anspruch 1, und **dadurch gekennzeichnet, dass** das Gesamtgewicht des Kohlenwasserstoffharzes zwischen 1 % und 60 % des Gesamtgewichts der Folie liegt.

8. Folie nach Anspruch 1, und **dadurch gekennzeichnet, dass** das Gewicht des Kohlenwasserstoffharzes in der Basisschicht C zwischen 5 % und 50 % des Gesamtgewichts der Basisschicht C liegt.

9. Folie nach Anspruch 1, und **dadurch gekennzeichnet, dass** das Gewicht des Kohlenwasserstoffharzes in jeder der Schichten A, B und D zwischen 5 % und 20 % des Gesamtgewichts von jeder Schicht A, B und D liegt.

10. Folie nach Anspruch 1, und **dadurch gekennzeichnet, dass** 85 % des Gesamtgewicht des in Ansprüchen 8 und 9 definierten Harzes ein durchschnittliches Molekulargewicht zwischen 1500 und 2500 und insbesondere zwischen 1750 und 2250 haben.

11. Folie nach Anspruch 1, und **dadurch gekennzeichnet, dass** der Erweichungspunkt des Harzes in der in den Ansprüchen 8, 9 und 10 definierten Schicht C zwischen 120 und 160 °C liegt.

12. Folie nach Anspruch 1, und **dadurch gekennzeichnet, dass** die Schichten A, B und C Füllstoff zwischen 3 Gew.-% und 30 Gew.-% von jeder Schicht A, B und C umfassen.

13. Folie nach Anspruch 1, und **dadurch gekennzeichnet, dass** der in Anspruch 12 definierte Füllstoff Calciumcarbonat und/oder Talkum in einem Polyolefinträger ist.

14. Folie nach Anspruch 1, und **dadurch gekennzeichnet, dass** der Polyolefinträger in dem in Anspruch 13 definierten Füllstoff vorzugsweise Polypropylen ist.

15. Folie nach Anspruch 1, und **dadurch gekennzeichnet, dass** das Gewicht des Calciumcarbonats und/oder Talkums in dem in Ansprüchen 12, 13 und 14 definierten Füllstoff zwischen 50 % und 70 % liegt, und das Gewicht des Polyolefins in dem in Ansprüchen 12, 13 und 14 definierten Füllstoff zwischen 30 % und 50 % des Gesamtgewichts des Füllstoffs liegt.

16. Folie nach Anspruch 1, und **dadurch gekennzeichnet, dass** die Schicht B Farbkonzentrat zwischen 5 Gew.-% und 15 Gew.-% der Schicht B umfasst.

17. Folie nach Anspruch 1, und **dadurch gekennzeichnet, dass** das in Anspruch 16 definierte Farbkonzentrat Titandioxid in einem Polyolefinträger ist.

18. Folie nach Anspruch 1, und **dadurch gekennzeichnet, dass** der Polyolefinträger in dem in Anspruch 17 definierten Farbkonzentrat vorzugsweise Polypropylen ist.

19. Folie nach Anspruch 1, und **dadurch gekennzeichnet, dass** das Gewicht des Titandioxids in dem in Anspruch 16 definierten Farbkonzentrat zwischen 60 % und 80 % liegt, und das Gewicht des Polyolefins in dem in Ansprüchen 16, 17 und 18 definierten Farbkonzentrat zwischen 20 % und 40 % des Gesamtgewichts des Farbkonzentrats liegt.

20. Folie nach Anspruch 1, und **dadurch gekennzeichnet, dass** das Gewicht des Antiblockiermittels in der Schicht E zwischen 0,1 % und 1,5 % des Gesamtgewichts dieser Schicht liegt.

21. Folie nach Anspruch 1, und **dadurch gekennzeichnet, dass** das in Anspruch 20 definierte Antiblockiermittel aus anorganischen Additiven wie Siliziumdioxid, Calciumcarbonat, Magnesiumsilikat, Aluminiumsilikat, Calciumphosphat und dergleichen und/oder organischen Polymeren wie Polyamiden, Polyestern und dergleichen ausgewählt ist.

22. Folie nach Anspruch 1, und **dadurch gekennzeichnet, dass** die Gesamtdicke der Folie zwischen 40 und 100 µm, vorzugsweise zwischen 70 und 90 µm liegt.

23. Folie nach Anspruch 1, und **dadurch gekennzeichnet, dass** die Gesamtdicke der Basisschicht C zwischen 30 und 96 µm, vorzugsweise zwischen 53 und 86 µm liegt.

24. Folie nach Anspruch 1, und **dadurch gekennzeichnet, dass** die Dicke von jeder der Schichten A, B, D und E weniger als 5 µm beträgt.

25. Folie nach Anspruch 1, und **dadurch gekennzeichnet, dass** der Schmelzpunkt der Polypropylenpolymere in den Schichten A, B, C und D 150 °C oder darüber ist.

## Revendications

1. Film de polypropylène biorienté (BOPP) coextrudé pour emballer les produits alimentaires tels que la margarine, le beurre ou similaire avec les couches de A/B/C/D/E, ayant la couche de base C comprenant un homopolymère de polypropylène, une résine hydrocarbure et une charge de remplissage
**caractérisé en ce que** ;
• la couche externe A comprend un homopolymère de polypropylène et une résine hydrocarbure et une charge de remplissage,
• la couche interne B comprend un homopolymère de polypropylène et une résine hydrocarbure, une charge de remplissage et un agent colorant,
• la deuxième couche interne D comprend essentiellement un homopolymère de polypropylène et une résine hydrocarbure,
• la deuxième couche externe E comprend un agent anti-bloquant et un copolymère d'éthylène et de propylène et/ou un terpolymère d'éthylène, de propylène et de butylène.

2. Film tel que revendiqué dans la revendication 1, et **caractérisé en ce que** le poids du polypropylène dans la couche de base C est compris entre 65 % et 85 %, de préférence entre 70 % et 80 % du poids total de ladite couche C.

3. Film tel que revendiqué dans la revendication 1, et **caractérisé en ce que** le poids du polypropylène dans les couches A et D est compris entre 75 % et 95 %, de préférence entre 80 % et 90 % du poids de chacune desdites couches A et D.

4. Film tel que revendiqué dans la revendication 1, et **caractérisé en ce que** le poids du polypropylène dans la couche B est compris entre 65 % et 85 %, de préférence entre 70 % et 80 % du poids total de ladite couche B.

5. Film tel que revendiqué dans la revendication 1, et **caractérisé en ce que** plus de 95 % en poids du copolymère dans la couche E est du polypropylène.

6. Film tel que revendiqué dans la revendication 1, et **caractérisé en ce que** plus de 85 % en poids du terpolymère dans la couche E est du polypropylène.

7. Film tel que revendiqué dans la revendication 1, et **caractérisé en ce que** le poids total de la résine hydrocarbure est compris entre 1 % et 60 % du poids total du film.

8. Film tel que revendiqué dans la revendication 1, et **caractérisé en ce que** le poids de la résine hydrocarbure dans la couche de base C est compris entre 5 % et 50 % du poids total de la couche de base C.

9. Film tel que revendiqué dans la revendication 1, et **caractérisé en ce que** le poids de la résine hydrocarbure dans chacune des couches A, B et D est compris entre 5 % et 20 % du poids total de chaque couche A, B et D.

10. Film tel que revendiqué dans la revendication 1, et **caractérisé en ce que** 85 % du poids total de la résine définie dans les revendications 8 et 9 présente un poids moléculaire moyen compris entre 1 500 et 2 500, et de manière préférée entre 1 750 et 2 250.

11. Film tel que revendiqué dans la revendication 1, et **caractérisé en ce que** le point de ramollissement de la résine dans la couche C définie dans les revendications 8, 9 et 10 est compris entre 120 et 160 °C.

12. Film tel que revendiqué dans la revendication 1, et **caractérisé en ce que** les couches A, B et C comprennent une charge de remplissage comprise entre 3 % et 30 % en poids de chaque couche A, B et C.

13. Film tel que revendiqué dans la revendication 1, et **caractérisé en ce que** la charge de remplissage définie dans la revendication 12, est du carbonate de calcium et/ou du talc dans un support polyoléfine.

14. Film tel que revendiqué dans la revendication 1, et **caractérisé en ce que** le support polyoléfine dans la charge de remplissage définie dans la revendication 13, est de préférence du polypropylène.

15. Film tel que revendiqué dans la revendication 1, et **caractérisé en ce que** le poids de carbonate de calcium et/ou de talc dans la charge de remplissage définie dans les revendications 12, 13 et 14 est compris entre 50 % et 70 % et le poids de polyoléfine dans la charge de remplissage définie dans les revendications 12, 13 et 14 est compris entre 30 % et 50 % du poids total de la charge de remplissage.

16. Film tel que revendiqué dans la revendication 1, et **caractérisé en ce que** la couche B comprend un colorant concentré entre 5 % et 15 % en poids de la couche B.

17. Film tel que revendiqué dans la revendication 1, et **caractérisé en ce que** le colorant concentré défini dans la revendication 16, est du dioxyde de titane dans un support polyoléfine.

18. Film tel que revendiqué dans la revendication 1, et **caractérisé en ce que** le support polyoléfine dans le colorant concentré défini dans la revendication 17, est de préférence du polypropylène.

19. Film tel que revendiqué dans la revendication 1, et **caractérisé en ce que** le poids de dioxyde de titane dans le colorant concentré défini dans la revendication 16 est compris entre 60 % et 80 % et le poids de polyoléfine dans le colorant concentré défini dans les revendications 16, 17 et 18 est compris entre 20 % et 40 % du poids total du colorant concentré.

20. Film tel que revendiqué dans la revendication 1, et **caractérisé en ce que** le poids d'agent anti-bloquant dans la couche E est compris entre 0,1 % et 1,5 % du poids total de ladite couche.

21. Film tel que revendiqué dans la revendication 1, et **caractérisé en ce que** l'agent anti-bloquant défini dans la revendication 20 est choisi parmi des additifs inorganiques tels que le dioxyde de silicium, le carbonate de calcium, le silicate de magnésium, le silicate d'aluminium, le phosphate de calcium et similaires et/ou des polymères organiques tels que les polyamides, les polyesters et similaires.

22. Film tel que revendiqué dans la revendication 1, et **caractérisé en ce que** l'épaisseur totale du film est comprise entre 40 et 100 µm, de préférence entre 70 et 90 µm.

23. Film tel que revendiqué dans la revendication 1, et **caractérisé en ce que** l'épaisseur totale de la couche de base C est comprise entre 30 et 96 µm, de préférence entre 53 et 86 µm.

24. Film tel que revendiqué dans la revendication 1, et **caractérisé en ce que** l'épaisseur de chacune des couches A, B, D et E est inférieure à 5 µm.

25. Film tel que revendiqué dans la revendication 1, et **caractérisé en ce que** le point de ramollissement des polymères de polypropylène dans les couches A, B, C et D est de 150 °C ou plus.
